# EUROPEAN PATENT APPLICATION

(11) **EP 3 611 434 A1**
(43) Date of publication of application: **19.02.2020**
(21) Application number: 17905772.4
(22) Date of filing: 12.04.2017
(51) Int. Cl.: F24D 3/00

(54) **HYDRONIC HEATING DEVICE AND HYDRONIC HEATING METHOD**

(71) Applicant: Toshiba Carrier Corporation, Kawasaki-shi, Kanagawa 212-8585 (JP)
(72) Inventor: WATANABE, Yoshinori, Shizuoka 4168521 (JP)
(74) Representative: Gramm, Lins & Partner Patent- und Rechtsanwälte PartGmbB
(86) International application number: PCT/JP2017/014946
(87) International publication number: WO 2018/189824

(57) **Abstract**

A hydronic heating device (1) comprises: a first use-side device (5) that is provided inside a first room (R1) and that heats air in the first room (R1) by hot water (W), which is flowing in a hot water circuit (4), passing therein; a first room temperature sensor (11) that detects the room temperature of the first room (R1) ; a first control unit (20) that controls the water temperature of the hot water (W) flowing in the first use-side device (5) on the basis of the room temperature of the first room (R1) detected by the first room temperature sensor (11); a second use-side device (6) that is provided under the floor of a second room (R2) and that warms the floor by the hot water (W), which is flowing in the hot water circuit (4), passing therein; a second room temperature sensor (12) that detects the room temperature of the second room (R2); and a second control unit (20) that controls the water temperature of the hot water (W) flowing in the second use-side device (6) on the basis of the room temperature of the second room (R2) detected by the second room temperature sensor (12) .

## Description

### Technical Field

Embodiments of the present invention relate to a hydronic heating device and a hydronic heating method.

### Background Art

In a conventional heating device using hot water, hot water is supplied from a single hot water supply device to utilization devices with different applications such as a bathroom heating dryer and a floor heater. In this heating device, its floor heating panel is provided with a floor temperature sensor, and the heating output of its floor heater is adjusted on the basis of the temperature having been set by a user and the heating temperature detected by the floor temperature sensor.

### Prior Art Document

### Patent Document

[Patent Document 1] Japanese Patent No. 3949050

### Description of Invention

### Problems to be solved by Invention

The room temperature of the room in which the floor heater is installed changes depending on the state of ventilation. However, in the above-described heating device, the heating output of the floor heater is adjusted on the basis of the floor temperature sensor, and thus the condition of the actual room temperature is not reflected in the heating output of the floor heater. Accordingly, the above-described heating device has a problem that the room temperature of the room in which the floor heater is installed cannot be controlled to an appropriate temperature.

In view of the above-described problem, an object of the present invention is to provide hydronic heating technology by which a room temperature can be controlled to an appropriate temperature.

### Means for solving Problem

In one embodiment of the present invention, a hydronic heating device comprising:
a heater configured to heat hot water;
a hot water circuit in which the hot water heated by the heater circulates;
a first utilization device that is provided inside a first room and warms air in the first room by causing the hot water flowing in the hot water circuit to flow through interior of the first utilization device;
a first room temperature sensor configured to detect a room temperature of the first room;
a first controller configured to control a temperature of the hot water flowing in the first utilization device based on the room temperature of the first room detected by the first room temperature sensor;
a second utilization device that is provided under a floor of a second room and heats the floor by causing the hot water flowing in the hot water circuit to flow through interior of the second utilization device;
a second room temperature sensor configured to detect a room temperature of the second room; and
a second controller configured to control a water temperature of the hot water flowing in the second utilization device based on the room temperature of the second room detected by the second room temperature sensor.

In one embodiment of the present invention, the hydronic heating device according to claim 1, further comprising:
a water temperature sensor configured to detect the water temperature of the hot water supplied from the heater to the hot water circuit;
a heating controller configured to control an output of the heater in such a manner that the water temperature of the hot water detected by the water temperature sensor becomes a target water temperature;
an adjusting valve configured to adjust flow rate of the hot water flowing from the hot water circuit to the second utilization device;
a first setting unit configured to set a first target room temperature of the first room;
a target water temperature changing unit configured to change the target water temperature every first specified time, based on difference between the first target room temperature and the room temperature of the first room detected by the first room temperature sensor;
a second setting unit configured to set a second target room temperature of the second room; and
an opening-degree changing unit configured to change opening degree of the adjusting valve every second specified time, based on difference between the second target room temperature and the room temperature of the second room detected by the second room temperature sensor.

In one embodiment of the present invention, a hydronic heating method comprising steps of:
causing a heater to heat hot water;
circulating the hot water heated by the heater in a hot water circuit;
causing a first utilization device provided in a first room to warm air in the first room, the first utilization device being configured in such a manner that the hot water flows through interior of the first utilization device;
detecting a room temperature of the first room by using a first room temperature sensor;
controlling a water temperature of the hot water flowing through the first utilization device based on the room temperature of the first room detected by the first room temperature sensor;
causing a second utilization device provided under a floor of a second room to heat the floor, the second utilization device being configured in such a manner that the hot water flows through interior of the second utilization device;
detecting a room temperature of the second room by using a second room temperature sensor; and
controlling the water temperature of the hot water flowing through the second utilization device based on the room temperature of the second room detected by the second room temperature sensor.

In one embodiment of the present invention, the hydronic heating method according to claim 3, further comprising steps of:
detecting the water temperature of the hot water supplied from the heater to the hot water circuit by using a water temperature sensor;
controlling an output of the heater in such a manner that a water temperature detected by the water temperature sensor becomes a target water temperature;
adjusting flow rate of the hot water flowing from the hot water circuit to the second utilization device by using an adjusting valve;
setting a first target room temperature of the first room;
changing the target water temperature every first specified time, based on difference between the first target room temperature and the room temperature of the first room detected by the first room temperature sensor;
setting a second target room temperature of the second room; and
changing opening degree of the adjusting valve every second specified time, based on difference between the second target room temperature and the room temperature of the second room detected by the second room temperature sensor.

In one embodiment of the present invention, a hydronic heating device comprising:
a heater configured to heat hot water;
a hot water circuit in which the hot water heated by the heater circulates;
a first utilization device that is provided inside a first room and warms the first room by causing the hot water flowing in the hot water circuit to flow through interior of the first utilization device;
a first room temperature sensor configured to detect a room temperature of the first room;
a first controller configured to control a water temperature of the hot water flowing in the first utilization device based on the room temperature of the first room detected by the first room temperature sensor;
a second utilization device that is provided in a second room and warms the second room by causing the hot water flowing in the hot water circuit to flow through interior of the second utilization device at a water temperature equal to or lower than the water temperature of the hot water flowing through the first utilization device;
a second room temperature sensor configured to detect a room temperature of the second room; and
a second controller configured to control the water temperature of the hot water flowing in the second utilization device based on the room temperature of the second room detected by the second room temperature sensor.

### Brief Description of Drawings

Fig. 1 is a system configuration diagram illustrating a hydronic heating device.
Fig. 2 is a block diagram illustrating the hydronic heating device.
Fig. 3 is a flowchart illustrating a hydronic heating operation.
Fig. 4 is a flowchart illustrating the hydronic heating operation.
Fig. 5 is a flowchart illustrating the hydronic heating operation.
Fig. 6 is a flowchart illustrating the hydronic heating operation.
Fig. 7 is a flowchart illustrating the hydronic heating operation.

### Modes for embodying Invention

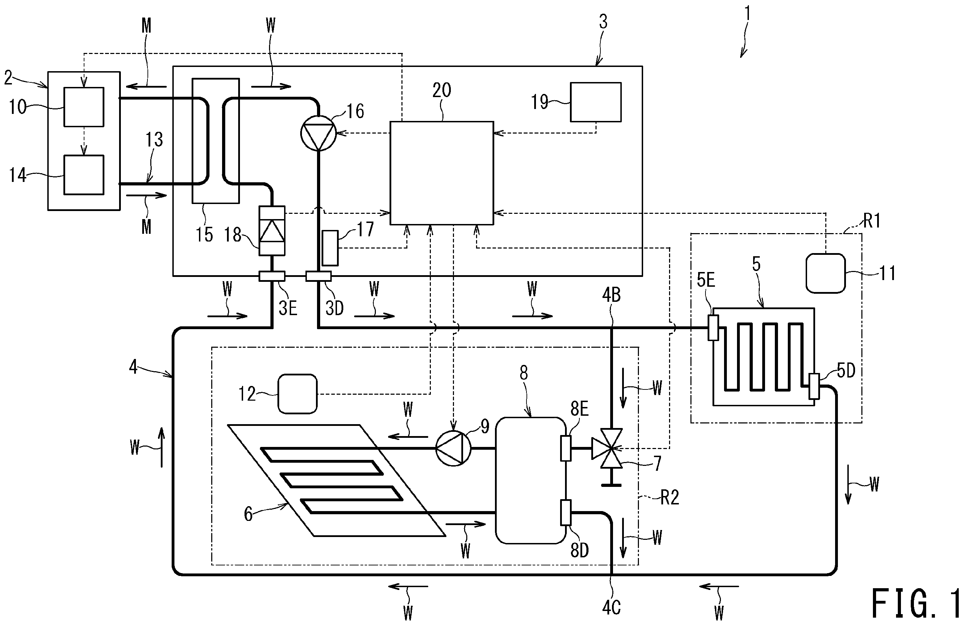

A description will now be given of embodiments of the present embodiment by referring to the accompanying drawings. The reference sign 1 in Fig. 1 indicates a hydronic heating device of the present embodiment. This hydronic heating device 1 heats both a first room (first zone) R1 provided in a predetermined building and a second room (second zone) R2 different from the first room R1.

This hydronic heating device 1 includes: an outdoor unit 2 provided outside the room; a hydro unit 3 configured to generate hot water W by heating water with the use of the heat transferred by the outdoor unit 2; a hot water circuit 4 in which the hot water W heated by the hydro unit 3 can circulate; a radiator 5 which is a first utilization device provided inside the first room R1 and through which the hot water W flowing in the hot water circuit 4 flows; a floor heating pipe 6 which is a second utilization device provided under the floor of the second room R2 and through which part of the hot water W flowing in the hot water circuit 4 flows; an adjusting valve 7 which controls the flow rate of the hot water W flowing from the hot water circuit 4 to the floor heating pipe 6; a buffer tank 8 in which the hot water W flowing to the floor heating pipe 6 is stored; a floor heating pump 9 configured to send the hot water W in the buffer tank 8 to the floor heating pipe 6; a first room temperature sensor 11 configured to detect the room temperature of the first room R1; and a second room temperature sensor 12 configured to detect the room temperature of the second room R2.

Each of the first room temperature sensor 11 and the second room temperature sensor 12 is disposed on the wall of the corresponding room. The first room temperature sensor 11 and the second room temperature sensor 12 are disposed at a predetermined height from the floor surface, for example, at a height of 1 m from the floor surface.

The outdoor unit 2 includes: a refrigerant circuit 13 which constitutes a refrigeration cycle circuit and in which a refrigerant M can circulate; a compressor 14 for circulating the refrigerant M in the refrigerant circuit 13; and an outdoor controller 10 configured to control components which constitute the refrigeration cycle circuit including the compressor 14. The outdoor unit 2 is a heat pump type device that performs heating by transferring heat from a low temperature region to a high temperature region with the use of outdoor air as a heat source. Much heat can be transferred to the high temperature region by increasing the number of revolutions of the compressor 14. Conversely, the amount of heat transferred to the high temperature region is reduced by reducing the number of revolutions of the compressor 14.

The hydro unit 3 includes: a water heat exchanger 15 that exchanges heat between the refrigerant M flowing through the refrigerant circuit 13 and the hot water W flowing through the hot water circuit 4; a circulating pump 16 configured to circulate the hot water W in the hot water circuit 4; a water temperature sensor 17 configured to detect the water temperature of the hot water W at the hot-water outlet 3D of the hydro unit 3; a flow switch 18 configured to detect the flow rate of the hot water W at the hot-water inlet 3E of the hydro unit 3; a setting operation unit 19 configured to set the target room temperature for the first room R1 or the second room R2; and a main controller 20 configured to control respective components.

The hydro unit 3 constitutes part of the flow path of the hot water W in the hot water circuit 4. In the present embodiment, the outdoor unit 2 and the water heat exchanger 15 constitute a heater for heating the hot water W.

If the number of revolutions of the compressor 14 of the outdoor unit 2 is increased under the condition where the number of revolutions of the circulating pump 16 is constant, the temperature of the hot water W is raised. Conversely, if the number of revolutions of the compressor 14 of the outdoor unit 2 is decreased under the condition where the number of revolutions of the circulating pump 16 is constant, the temperature of the hot water W is lowered.

A user of the hydronic heating device 1 can set a first target room temperature of the first room R1 or a second target room temperature of the second room R2 by operating the setting operation unit 19. The main controller 20 controls respective components in such a manner that the room temperature of the first room R1 or the room temperature of the second room R2 becomes the target room temperature having been set by the user.

The radiator 5 (i.e., high temperature heating device) is a device for warming the air of the first room R1. The hot water flowing through the radiator 5 has a water temperature of about 50°C. The radiator 5 is provided with: piping in which the hot water flows; and fins which radiate heat of the piping. The hot water W flowing through the hot water circuit 4 enters from the hot-water inlet 5E of the radiator 5, and the hot water W exits from the hot-water outlet 5D of the radiator 5 to the hot water circuit 4. In other words, the radiator 5 constitutes part of the flow path of the hot water W in the hot water circuit 4. The hot water W having flowed out from the radiator 5 to the hot water circuit 4 is returned to the hydro unit 3 again and heated.

The water temperature of the hot water W at the hot-water inlet 5E of the radiator 5 is substantially the same as the water temperature of the hot water W at the hot-water outlet 3D of the hydro unit 3. In other words, the water temperature detected by the water temperature sensor 17 is substantially the same as the water temperature of the hot water W flowing inside the radiator 5. Since heat is dissipated by the radiator 5, the hot water W at the hot-water outlet 5D of the radiator 5 is lower in temperature than the hot water W of its hot-water inlet 5E.

When the hot water W flows to radiator 5, the air of the first room R1 is warmed. The water temperature of the hot water W flowing to the radiator 5, i.e., the water temperature of the hot water W flowing through the hot water circuit 4 is controlled by the number of revolutions of the compressor 14 of the outdoor unit 2. For example, when the number of revolutions of the compressor 14 of the outdoor unit 2 is increased, the room temperature of the first room R1 is raised. Conversely, when the number of revolutions of the compressor 14 of the outdoor unit 2 is decreased, the room temperature of the first room R1 is lowered.

The floor heating pipe 6 (i.e., low temperature heating device) is a device for heating the floor of the second room R2. The hot water W can flow through the interior of the floor heating pipe 6. The floor heating pipe 6 is bent and configured into a panel. This floor heating pipe 6 (i.e., floor heating panel) is laid under the floor. The air in the second room R2 is also warmed by heat conduction, convection, and radiation generated by heating the floor. The hot water flowing through the floor heating pipe 6 has a water temperature of about 30°C to 40°C.

The adjusting valve 7 is connected to a branch portion 4B of the hot water circuit 4. When the adjusting valve 7 is opened, the hot water W flows from the hot water circuit 4 to the buffer tank 8. The adjusting valve 7 is a valve that changes the flow rate of the hot water W by adjusting its opening degree. The adjusting valve 7 of the present embodiment is constituted by a hot and cold water mixing valve having two inlets. Of the two inlets of this adjusting valve 7, the inlet on one side is blocked. When the adjusting valve 7 is completely closed, it leads to the inlet on the closed side, and thus the flow rate of the hot water W flowing into the buffer tank 8 becomes zero. As the adjusting valve 7 opens, the flow rate of the hot water W flowing into the buffer tank 8 increases.

The hot water W flows into the buffer tank 8 from the hot-water inlet 8E. The hot-water outlet 8D of the buffer tank 8 is connected to the confluence portion 4C of the hot water circuit 4. The buffer tank 8 is constantly full of water, and the same amount of the hot water W as the amount of the hot water W flowing into the buffer tank 8 flows out from the hot-water outlet 8D to the hot water circuit 4. The hot water W having flowed out from the buffer tank 8 to the hot water circuit 4 is returned to the hydro unit 3 again and heated.

When the floor heating pump 9 is driven, the hot water W stored in the buffer tank 8 flows through the floor heating pipe 6. The hot water W having flowed through the floor heating pump 9 is stored in the buffer tank 8 again. In other words, the floor heating pump 9 circulates the hot water W between the floor heating pipe 6 and the buffer tank 8. Since heat is dissipated by the floor heating pipe 6, the hot water W stored in the buffer tank 8 is lower in temperature than the hot water W flowing through the hot water circuit 4.

When the hot water W flows in the floor heating pipe 6, the air in the second room R2 is warmed. The water temperature of the hot water W flowing through the floor heating pipe 6 is controlled by the opening degree of the adjusting valve 7. In other words, when the opening degree of the adjusting valve 7 is increased, the hot water W of a high temperature flows into the buffer tank 8 and thereby the temperature of floor heating pipe 6 is raised. Conversely, when the opening degree of the adjusting valve 7 is reduced, the hot water W of a high temperature is less likely to flow into the buffer tank 8 and thereby the temperature of the floor heating pipe 6 is lowered.

It should be noted that closing the adjusting valve 7 prevents the hot water W from flowing into the buffer tank 8. The heat dissipation by the floor heating pipe 6 lowers the temperature of the hot water W stored in the buffer tank 8. For example, when the opening degree of the adjusting valve 7 is increased, the amount of heat is increased by the hot water W flowing into the buffer tank 8, and thereby the room temperature of the second room R2 is increased. Conversely, when the opening degree of the adjusting valve 7 is reduced (closed), it becomes difficult for the hot water W to flow into the buffer tank 8 and thereby the amount of heat decreases, which lowers the room temperature of second room R2.

In the present embodiment, the heating output of the radiator 5 is controlled by the number of revolutions of the compressor 14 of the outdoor unit 2, and the heating output of the floor heating pipe 6 is controlled by the opening degree of the adjusting valve 7. In other words, the room temperature of the first room R1 and the room temperature of the second room R2 can be individually controlled.

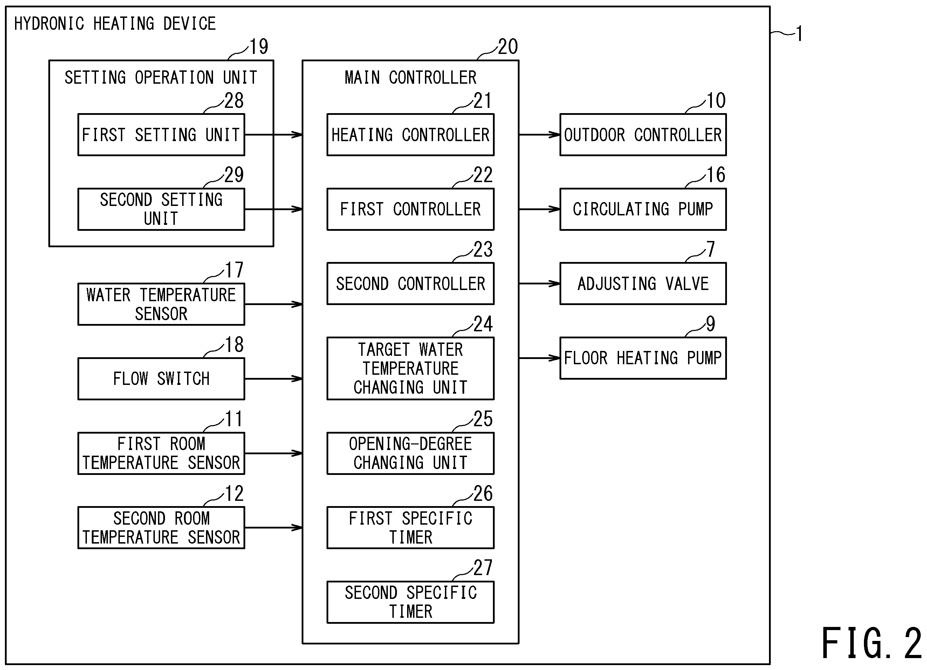

Next, the system configuration of the hydronic heating device 1 will be described by referring to the block diagram shown in Fig. 2. As shown in Fig. 2, the main controller 20 includes: a heating controller 21 configured to transmit a control signal to the outdoor controller 10 of the outdoor unit 2 and to control the circulating pump 16 in such a manner that the water temperature detected by the water temperature sensor 17 becomes a target water temperature; a first controller 22 configured to control the temperature of the hot water W flowing through the radiator 5 by changing the target water temperature on the basis of the room temperature of the first room R1 detected by the first room temperature sensor 11; a second controller 23 configured to control the temperature of the hot water W flowing through the floor heating pipe 6 on the basis of the room temperature of the second room R2 detected by the second room temperature sensor 12; a target water temperature changing unit 24 configured to change the target water temperature every first specified time on the basis of difference between the first target room temperature and the room temperature of the first room R1 detected by the first room temperature sensor 11; an opening-degree changing unit 25 configured to change the opening degree of the adjusting valve 7 every second specified time on the basis of difference between the second target room temperature and the room temperature of the second room R2 detected by the second room temperature sensor 12; a first specific timer 26 configured to count the first specific time; and a second specific timer 27 configured to count the second specific time.

When the outdoor controller 10 of the outdoor unit 2 receives the control signal from the main controller 20, the outdoor controller 10 controls the number of revolutions of the compressor 14 so as to optimize the heating capability of the water heat exchanger 15.

The target water temperature is a target water temperature when the hot water W is heated by the outdoor unit 2 and the water heat exchanger 15. At the start of the operation of the hydronic heating device 1, the target water temperature is set to an initial value. During operation, the target water temperature is changed depending on the room temperature of the first room R1.

Although the target water temperature is set depending on the room temperature of the first room R1, this is attributable to the fact that the hot-water temperature required by the first utilization device (i.e., radiator 5) in the first room R1 is equal to or higher than the hot-water temperature required by the second utilization device (i.e., floor heating pipe 6) in the second room R2. In other words, the target water temperature is set depending on the highest setting temperature among respective hot-water temperatures used by the plurality of utilization devices. In the present embodiment, the setting temperature of the first utilization device is the highest. In addition, the setting temperature of the second utilization device is equal to or lower than the setting temperature of the first utilization device.

Note that the initial value of the target water temperature may be a value specific to the hydronic heating device 1 or may be an arbitrary value to be set by a user by means of operating the setting operation unit 19.

The water temperature (i.e., outlet temperature) of the hot water W at the hot water outlet of the water heat exchanger 15 is determined on the basis of the setting temperature of the utilization device of one of the first room R1 and the second room R2 requiring higher hot-water temperature (target water supply temperature) than the other of the two rooms. The main controller 20 instructs the outdoor controller 10 to perform control such that the number of revolutions of the compressor 14 matches the number of revolutions corresponding to this.

In addition, the first target room temperature is a setting temperature to be set by a user and is the target room temperature of the first room R1. Further, the second target room temperature is a setting temperature to be set by a user and is the target room temperature of the second room R2.

The setting operation unit 19 is an operation panel on which a user performs various operations. This setting operation unit 19 includes: a first setting unit 28 configured to set the first target room temperature of the first room R1 on the basis of an input operation performed by a user; and a second setting unit 29 configured to set the second target room temperature of the second room R2.

Setting information on the target room temperature is inputted from the first setting unit 28 or the second setting unit 29 to the main controller 20. In detail, the main controller 20 receives the water temperature detected by the water temperature sensor 17, the flow rate detected by the flow switch 18, the room temperature of the first room R1 detected by the first room temperature sensor 11, and the room temperature of the second room R2 detected by the second room temperature sensor 12. In addition, the main controller 20 controls the circulating pump 16, the adjusting valve 7, and the floor heating pump 9 on the basis of the inputted various information items, and transmits a control signal to the outdoor controller 10 of the outdoor unit 2 so as to change the number of revolutions of the compressor 14.

The main controller 20 of the present embodiment includes hardware resources such as a processor and a memory and is configured as a computer in which information processing by software is achieved with the use of the hardware resources by causing the CPU to execute various programs.

Further, the hydronic heating method of the present embodiment is achieved by causing the computer to execute the various programs.

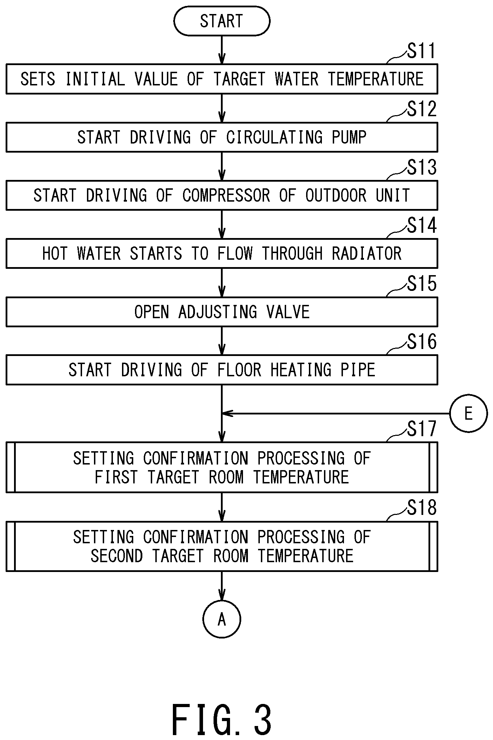

Next, the hot water heating operation executed by the main controller 20 will be described by referring to the flowcharts of Fig. 3 to Fig. 7.

As shown in Fig. 3, in the first step S11, when the operation of the hydronic heating device 1 is started, the main controller 20 sets the target water temperature to a predetermined initial value.

In the next step S12, the main controller 20 starts to drive the circulating pump 16.

In the next step S13, the main controller 20 transmits the control signal to the outdoor controller 10 of the outdoor unit 2, and driving of the compressor 14 is started.

In the next step S14, when the hot water W starts to flow through the hot water circuit 4, the hot water W starts to flow through the radiator 5. The heating output of the radiator 5 starts to raise the room temperature of the first room R1.

In the next step S15, the main controller 20 opens the adjusting valve 7. Here, the hot water W flows into the buffer tank 8.

In the next step S16, the main controller 20 starts to drive the floor heating pump 9, and thereby the hot water W flows through the floor heating pipe 6. The heating output of the floor heating pipe 6 causes the room temperature of the second room R2 to start rising. Note that the opening degree of the adjusting valve 7 may be adjusted depending on the second target temperature having been set.

In the next step S17, the main controller 20 executes setting confirmation processing of the first target room temperature. A user operates the setting operation unit 19 to set the first target room temperature which is the desired room temperature of the first room R1.

In the next step S18, the main controller 20 executes setting confirmation processing of the second target room temperature. A user operates the setting operation unit 19 to set the second target room temperature which is the desired room temperature of the second room R2.

The setting confirmation processing of the first target room temperature or the second target room temperature is processing for appropriately changing the temperature of the hot water generated by the water heat exchanger 15 even when the user changes the setting temperature during operation.

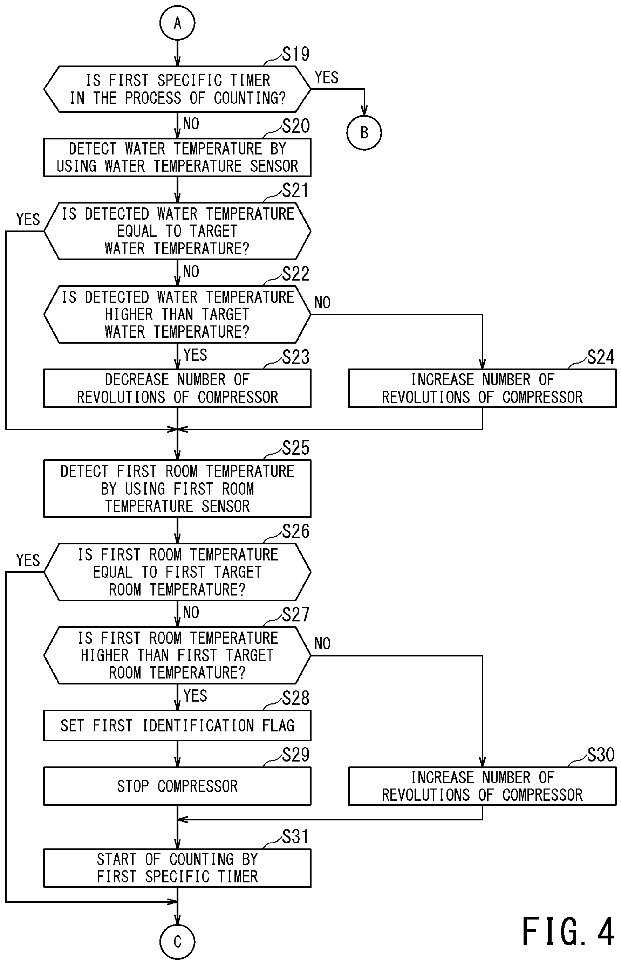

As shown in Fig. 4, in the step S19, the main controller 20 determines whether the first specific timer 26 is in the process of counting or not. If the first specific timer 26 is in the process of counting (YES in the step S19), the processing proceeds to the step S32 described below. Conversely, if the first specific timer 26 is not in the process of counting (NO in the step S19), the processing proceeds to the step S20.

In the step S20, the water temperature sensor 17 detects the water temperature of the hot water W at the hot-water outlet 3D of the hydro unit 3.

In the next step S21, the heating controller 21 determines whether the water temperature detected by the water temperature sensor 17 is equal to the target water temperature or not. If the water temperature detected by the water temperature sensor 17 is equal to the target water temperature (YES in the step S21), the processing proceeds to the step S25 described below. Conversely, if the water temperature detected by the water temperature sensor 17 is not equal to the target water temperature (NO in the step S21), the processing proceeds to the step S22.

In the step S22, the heating controller 21 determines whether the water temperature detected by the water temperature sensor 17 is higher than the target water temperature or not. If the water temperature detected by the water temperature sensor 17 is higher than the target water temperature (YES in the step S22), the processing proceeds to the step S23 in which the control signal is transmitted to the outdoor controller 10 of the outdoor unit 2 to reduce the number of revolutions of the compressor 14, and then the processing proceeds to the step S25. Conversely, if the water temperature detected by the water temperature sensor 17 is lower than the target water temperature (NO in the step S22), the processing proceeds to the step S24 in which the number of revolutions of the compressor 14 is increased, and then the processing proceeds to the step S25. In other words, the heating controller 21 controls the number of revolutions of the outdoor unit 2 compressor 14 in such a manner that the water temperature detected by the water temperature sensor 17 becomes the target water temperature.

In the step S25, the first room temperature sensor 11 detects the room temperature of the first room R1.

In the next step S26, the first controller 22 determines whether the room temperature of the first room R1 detected by the first room temperature sensor 11 is equal to the first target room temperature or not. If the room temperature of the first room R1 is equal to the first target room temperature (YES in the step S26), the processing proceeds to the step S40 described below. Conversely, if the room temperature of the first room R1 is not equal to the first target room temperature (NO in the step S26), the processing proceeds to the step 27.

In the step S27, the first controller 22 determines whether the room temperature of the first room R1 is higher than the first target room temperature or not. If the room temperature of the first room R1 is higher than the first target room temperature (YES in the step S27), a first identification flag is set in the step S28, then the compressor 14 of the outdoor unit 2 is stopped in the step S29, and then the processing proceeds to the step S31. Conversely, if the room temperature of the first room R1 is lower than the first target room temperature (NO in the step S27), the number of revolutions of the compressor 14 is increased without setting the first identification flag in the step S30, and then the processing proceeds to the step S31.

In other words, if the room temperature of the first room R1 is higher than the first target room temperature, the heat supply from the outdoor unit 2 is stopped by stopping the compressor 14 and thereby the temperature of the hot water W flowing through the radiator 5 is lowered, which lowers the room temperature of the first room R1 consequently. Conversely, if the room temperature of the first room R1 is lower than the first target room temperature, the temperature of the hot water W flowing through the radiator 5 is raised by increasing the number of revolutions of the compressor 14, and thereby the room temperature of the first room R1 is raised.

In the step S31, the first specific timer 26 starts counting of the first specific time, and then the processing proceeds to the step S40 described below. When the first specific timer 26 starts counting, a value corresponding to the first specific time is set. In addition, the first identification flag is a flag for identifying whether to set the target water temperature lower or set the target water temperature higher after completion of the counting by the first specific timer described below.

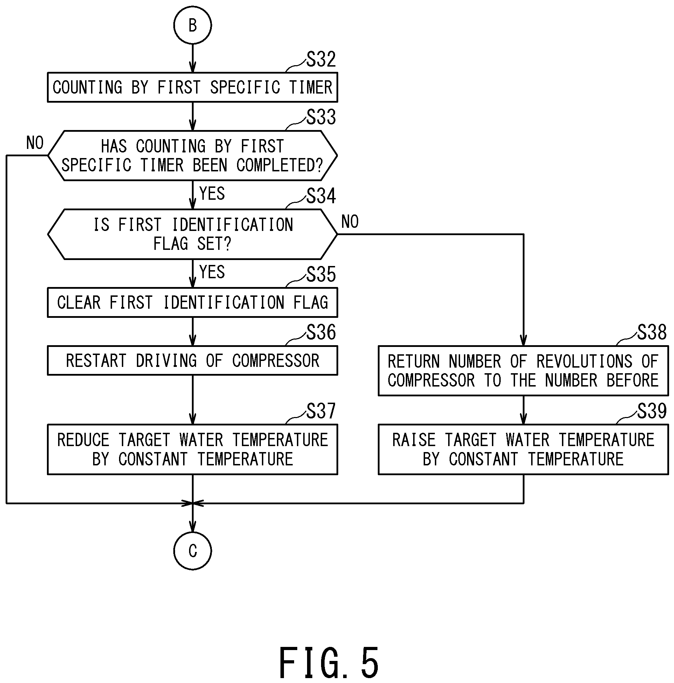

As shown in Fig. 5, in the step S32, the first controller 22 controls the counting by the first specific timer 26, i.e., subtracts 1 from the value of first specific timer 26.

In the next step S33, the first controller 22 determines whether the counting by the first specific timer 26 has completed or not, i.e., whether the value of the first specific timer 26 has become zero or not. If the counting by the first specific timer 26 is not completed (NO in the step S33), the processing proceeds to the step S40 described below. Conversely, if the counting by the first specific timer 26 has completed (YES in the step S33), the processing proceeds to the step S34.

In the step S34, the first controller 22 determines whether the first identification flag is set or not. If the first identification flag is set (YES in the step S34), the first identification flag is cleared in the step S35, and then the control signal is transmitted to the outdoor controller 10 of the outdoor unit 2 to resume the driving of the compressor 14 in the step S36. In the next step S37, the target water temperature changing unit 24 reduces the target water temperature by a constant temperature, and then the processing proceeds to the step S40 described below.

Conversely, if the first identification flag is not set (NO in the step S34), the processing proceeds to the step S38 in which the control signal is transmitted to the outdoor controller 10 of the outdoor unit 2 and thereby the number of revolutions of the compressor 14 is returned to the number of revolutions before the start of the counting by the first specific timer 26. Afterward, the target water temperature changing unit 24 raises the target water temperature by a constant temperature in the step S39, and then the processing proceeds to the step S40 described below.

In other words, if the room temperature of the first room R1 is higher than the first target room temperature, after elapse of the first specific time, the temperature of the hot water W flowing through the radiator 5 is lowered by lowering the target water temperature, and thereby the room temperature of the first room R1 is lowered. Conversely, if the room temperature of the first room R1 is lower than the first target room temperature, after elapse of the first specific time, the temperature of the hot water W flowing through the radiator 5 is raised by raising the target water temperature, and thereby the room temperature of the first room R1 is raised.

When the room temperature of the first room R1 is not equal to the first target room temperature after elapse of the first specified time, the counting by the first specific timer is started again. Afterward, the target water temperature is changed again after elapse of the first specified time. In other words, the target water temperature changing unit 24 changes the target water temperature every first specific time, on the basis of the difference between the first target room temperature and the room temperature of the first room R1 detected by the first room temperature sensor 11. The room temperature of the first room R1 gradually approaches and becomes equal to the first target room temperature by repeating the above processing.

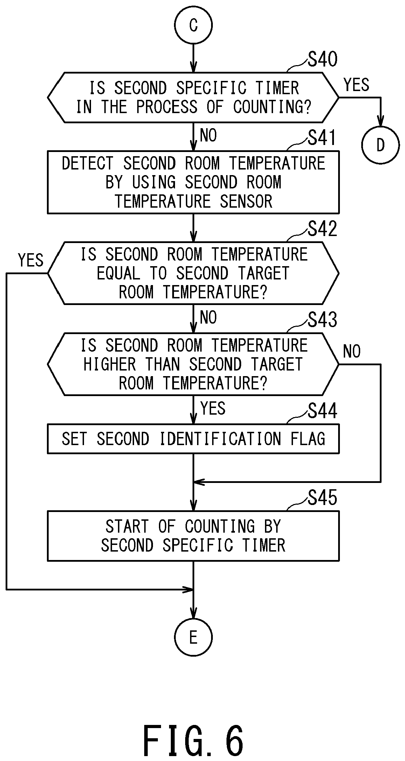

As shown in Fig. 6, in the step S40, the main controller 20 determines whether the second specific timer 27 is in the process of counting or not. If the second specific timer 27 is in the process of counting (YES in the step S40), the processing proceeds to the step S46 described below. Conversely. if the second specific timer 27 is not in the process of counting (NO in the step S40), the processing proceeds to the step S41.

In the step S41, the second room temperature sensor 12 detects the room temperature of the second room R2.

In the next step S42, the second controller 23 determines whether the room temperature of the second room R2 detected by the second room temperature sensor 12 is equal to the second target room temperature or not. If the room temperature of the second room R2 is equal to the second target room temperature (YES in the step S42), the processing returns to the above-described step S17. Conversely, if the room temperature of the second room R2 is not equal to the second target room temperature (NO in the step S42), the processing proceeds to the step S43.

In the step S43, the second controller 23 determines whether the room temperature of the second room R2 is higher than the second target room temperature or not. If the room temperature of the second room R2 is higher than the second target room temperature (YES in the step S43), the second identification flag is set in the step S44 and then the processing proceeds to the step S45. Conversely, if the room temperature of the second room R2 is lower than the second target room temperature (NO in the step S43), the processing proceeds to the step S45 without setting the second identification flag.

In the step S45, the second specific timer 27 starts counting of the second specific time, and then the processing returns to the above-described step S17. When the second specific timer 27 starts counting, a value corresponding to the second specific time is set. In addition, the second identification flag is a flag for identifying whether to narrow the adjusting valve 7 by control or to open the adjusting valve 7 by control after completion of the counting by the second specific timer 27 described below.

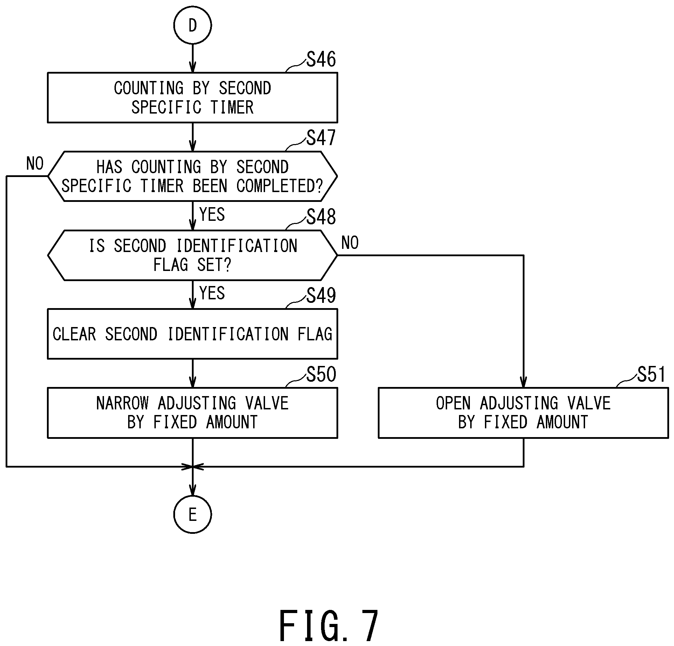

As shown in FIG. 7, in the step S46, the second controller 23 controls the counting by the second specific timer 27, i.e., subtracts 1 from the value of the second specific timer 27.

In the next step S47, the second controller 23 determines whether the counting by the second specific timer 27 has completed or not, i.e., whether the value of the second specific timer 27 has become zero or not. If the counting by the second specific timer 27 is not completed (NO in the step S47), the processing returns to the above-described S40. Conversely, if the counting by the second specific timer 27 has completed (YES in the step S47), the processing proceeds to the S48.

In the step S48, the second controller 23 determines whether the second identification flag is set or not. If the second identification flag is set (YES in the step S48), the second identification flag is cleared in the step S49, then the opening-degree changing unit 25 narrows the adjusting valve 7 by a fixed amount in the step S50, and then the processing returns to the above-described step S17. Conversely, if the second identification flag is not set (NO in the step S48), the opening-degree changing unit 25 opens the adjusting valve 7 by a fixed amount in the step S51, and then the processing returns to the above-described S17.

In other words, if the room temperature of the second room R2 is higher than the second target room temperature, after elapse of the second specified time, the temperature of the hot water W flowing through the floor heating pipe 6 is lowered by narrowing the adjusting valve 7, and thereby the room temperature of the second room R2 is lowered. Conversely, if the room temperature of the second room R2 is lower than the second target room temperature, after elapse of the second specified time, the temperature of the hot water W flowing through the floor heating pipe 6 is raised by opening the adjusting valve 7, and thereby the room temperature of the second room R2 is raised.

When the room temperature of the second room R2 is not equal to the second target room temperature after elapse of the second specified time, the counting by the second specific timer is started again. Then, after elapse of the second specific time, the opening degree of the adjusting valve 7 is changed again. In other words, the target water temperature changing unit 24 changes the opening degree of the adjusting valve 7 every second specific time, on the basis of the difference between the second target room temperature and the room temperature of the second room R2 detected by the second room temperature sensor 12. The room temperature of the second room R2 gradually approaches and becomes equal to the second target room temperature by repeating the above processing.

In the present embodiment, since the adjusting valve 7 for changing the temperature of the floor heating pipe 6 is gradually changed, the number of revolutions of the compressor 14 is not frequently changed due to change in room temperature. For example, even if the room temperature of the second room R2 changes rapidly due to temporary ventilation or due to opening and closing of the door in association with entering and leaving the second room R2, the adjusting valve 7 is gradually changed, so the temperature of the hot water W of the hot water circuit 4 is not lowered rapidly. Thus, the compressor 14 is not suddenly driven, and power consumption can be reduced.

In the present embodiment, the determination between a predetermined value (for example, the detected water temperature, the first room temperature, and the second room temperature) and a determination value (for example, the target water temperature, the first target room temperature, and the second target room temperature) may be (i) determination as to whether the predetermined value is not smaller than the determination value or not, (ii) determination as to whether the predetermined value is larger than the determination value, (iii) determination as to whether the predetermined value is not larger than the determination value or not, or (iv) determination as to whether the predetermined value is smaller than the determination value or not.

The temperature values (the target water temperature, the first target room temperature, and the second target room temperature) used for the determination in the present embodiment may be a temperature zone having a certain width. For example, when the target water temperature is set to 50°C, the temperature value used for the determination may be a temperature range of 49°C to 51°C.

Although a mode in which each step is executed in series is illustrated in the flowcharts of the present embodiment, the execution order of the respective steps is not necessarily fixed and the execution order of part of the steps may be changed. Additionally, some steps may be executed in parallel with another step.

Although one radiator 5 is provided in the first room R1 in the present embodiment, a plurality of radiators 5 may be provided. For example, when a plurality of first rooms R1 are provided, the radiators 5 may be provided for the respective first rooms R1. In this case, the temperature of the hot water W flowing through one radiator 5 is controlled by the number of revolutions of the compressor 14. The other radiators 5 are connected to the branch portion of the hot water circuit 4 through the adjusting valves. The water temperature of the hot water W flowing through the other radiators 5 is controlled by the opening degree of the adjusting valves. Further, a plurality of radiators 5 may be provided in one first room R1.

Although one floor heating pipe 6 is provided in the second room R2 in the present embodiment, a plurality of floor heating pipes 6 may be provided. For example, when a plurality of second rooms R2 are provided, the respective second rooms R2 may be provided with the floor heating pipes 6. In this case, the temperature of the hot water W flowing through one floor heating pipe 6 is controlled by the number of revolutions of the compressor 14. The other floor heating pipes 6 are connected to the branch portion of the hot water circuit 4 through the adjusting valves. The temperature of the hot water W flowing through the other floor heating pipes 6 is controlled by the opening degree of the adjusting valves. Additionally, a plurality of floor heating pipes 6 may be provided in one second room R2.

Although the radiator 5 is provided in the first room R1 and the floor heating pipe 6 is provided in the second room R2 in the present embodiment, it may be configured such that the configuration of the first room R1 provided with the radiator 5 is omitted and the floor heating pipe 6 is provided only in the second room R2. In this manner, the optimum room temperature can be maintained by changing the heating output of the floor heating pipe 6 on the basis of the room temperature.

According to the embodiment described above, since the temperature of the hot water flowing through the radiator is controlled on the basis of the temperature of the first room detected by the first temperature sensor and the temperature of the hot water flowing through the floor heating pipe is controlled on the basis of the temperature of the second room detected by the second temperature sensor, the room temperature can be controlled to an appropriate temperature.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the framework of the inventions. The above-cited invention and their equivalents are intended to cover such forms or modifications as would fall within the scope of the inventions.

### Reference Signs List

- 1: hydronic heating device
- 2: outdoor unit
- 3: hydro unit
- 3D: hot-water outlet
- 3E: hot-water inlet
- 4: hot water circuit
- 4B: branch portion
- 4C: confluence portion
- 5: radiator
- 5D: hot-water outlet
- 5E: hot-water inlet
- 6: floor heating pipe
- 7: adjusting valve
- 8: buffer tank
- 8D: hot-water outlet
- 8E: hot-water inlet
- 9: floor heating pump
- 10: outdoor controller
- 11: first room temperature sensor
- 12: second room temperature sensor
- 13: refrigerant circuit
- 14: compressor
- 15: water heat exchanger
- 16: circulating pump
- 17: water temperature sensor
- 18: flow switch
- 19: setting operation unit
- 20: main controller
- 21: heating controller
- 22: first controller
- 23: second controller
- 24: target water temperature changing unit
- 25: opening-degree changing unit
- 26: first specific timer
- 27: second specific timer
- 28: first setting unit
- 29: second setting unit
- M: refrigerant
- R1: first room
- R2: second room
- W: hot water

## Claims

1. A hydronic heating device comprising:
a heater configured to heat hot water;
a hot water circuit in which the hot water heated by the heater circulates;
a first utilization device that is provided inside a first room and warms air in the first room by causing the hot water flowing in the hot water circuit to flow through interior of the first utilization device;
a first room temperature sensor configured to detect a room temperature of the first room;
a first controller configured to control a temperature of the hot water flowing in the first utilization device based on the room temperature of the first room detected by the first room temperature sensor;
a second utilization device that is provided under a floor of a second room and heats the floor by causing the hot water flowing in the hot water circuit to flow through interior of the second utilization device;
a second room temperature sensor configured to detect a room temperature of the second room; and
a second controller configured to control a water temperature of the hot water flowing in the second utilization device based on the room temperature of the second room detected by the second room temperature sensor.

2. The hydronic heating device according to claim 1, further comprising:
a water temperature sensor configured to detect the water temperature of the hot water supplied from the heater to the hot water circuit;
a heating controller configured to control an output of the heater in such a manner that the water temperature of the hot water detected by the water temperature sensor becomes a target water temperature;
an adjusting valve configured to adjust flow rate of the hot water flowing from the hot water circuit to the second utilization device;
a first setting unit configured to set a first target room temperature of the first room;
a target water temperature changing unit configured to change the target water temperature every first specified time, based on difference between the first target room temperature and the room temperature of the first room detected by the first room temperature sensor;
a second setting unit configured to set a second target room temperature of the second room; and
an opening-degree changing unit configured to change opening degree of the adjusting valve every second specified time, based on difference between the second target room temperature and the room temperature of the second room detected by the second room temperature sensor.

3. A hydronic heating method comprising steps of:
causing a heater to heat hot water;
circulating the hot water heated by the heater in a hot water circuit;
causing a first utilization device provided in a first room to warm air in the first room, the first utilization device being configured in such a manner that the hot water flows through interior of the first utilization device;
detecting a room temperature of the first room by using a first room temperature sensor;
controlling a water temperature of the hot water flowing through the first utilization device based on the room temperature of the first room detected by the first room temperature sensor;
causing a second utilization device provided under a floor of a second room to heat the floor, the second utilization device being configured in such a manner that the hot water flows through interior of the second utilization device;
detecting a room temperature of the second room by using a second room temperature sensor; and
controlling the water temperature of the hot water flowing through the second utilization device based on the room temperature of the second room detected by the second room temperature sensor.

4. The hydronic heating method according to claim 3, further comprising steps of:
detecting the water temperature of the hot water supplied from the heater to the hot water circuit by using a water temperature sensor;
controlling an output of the heater in such a manner that a water temperature detected by the water temperature sensor becomes a target water temperature;
adjusting flow rate of the hot water flowing from the hot water circuit to the second utilization device by using an adjusting valve;
setting a first target room temperature of the first room;
changing the target water temperature every first specified time, based on difference between the first target room temperature and the room temperature of the first room detected by the first room temperature sensor;
setting a second target room temperature of the second room; and
changing opening degree of the adjusting valve every second specified time, based on difference between the second target room temperature and the room temperature of the second room detected by the second room temperature sensor.

5. A hydronic heating device comprising:
a heater configured to heat hot water;
a hot water circuit in which the hot water heated by the heater circulates;
a first utilization device that is provided inside a first room and warms the first room by causing the hot water flowing in the hot water circuit to flow through interior of the first utilization device;
a first room temperature sensor configured to detect a room temperature of the first room;
a first controller configured to control a water temperature of the hot water flowing in the first utilization device based on the room temperature of the first room detected by the first room temperature sensor;
a second utilization device that is provided in a second room and warms the second room by causing the hot water flowing in the hot water circuit to flow through interior of the second utilization device at a water temperature equal to or lower than the water temperature of the hot water flowing through the first utilization device;
a second room temperature sensor configured to detect a room temperature of the second room; and
a second controller configured to control the water temperature of the hot water flowing in the second utilization device based on the room temperature of the second room detected by the second room temperature sensor.
